# FASCICULE DE BREVET EUROPEEN

(11) **EP 2 372 595 B1**
(45) Date de publication et mention de la délivrance du brevet: **11.09.2013**
(21) Numéro de dépôt: 11159546.8
(22) Date de dépôt: 24.03.2011
(51) Int. Cl.: G06F 21/85, G01R 31/317, G01R 31/3185

(54) **Dispositif permettant de sécuriser un bus de type JTAG**
Vorrichtung zur Absicherung eines JTAG Busses
Device allowing to secure a JTAG Bus

(30) Priorité: 26.03.2010 FR 1001225
(43) Date de publication de la demande: 05.10.2011
(73) Titulaire: Thales, 92200 Neuilly Sur Seine (FR)
(72) Inventeur: Doumenjou, M. Antony, 49309, Cholet (FR); Lemahieu, Steeve, 49309, Cholet (FR); Mace, Gaël, 49309, Cholet (FR); Teyssier, Olivier, 49309, Cholet (FR)
(74) Mandataire: Dudouit, Isabelle

(56) Documents cités:
- FR-A1- 2 888 330
- US-A- 6 141 757
- US-A1- 2007 044 158
- US-A1- 2007 188 351
- HELY D ET AL: "Test Control for Secure Scan Designs", TEST SYMPOSIUM, 2005. EUROPEAN TALLINN, ESTONIA 22-25 MAY 2005, PISCATAWAY, NJ, USA,IEEE, 22 mai 2005 (2005-05-22), pages 190-195, XP010801332, DOI: DOI:10.1109/ETS.2005.36 ISBN: 978-0-7695-2341-5
- WIKIPEDIA: "Joint Test Action Group", INTERNET CITATION, 23 décembre 2009 (2009-12-23), pages 1-12, XP007916691, Extrait de l'Internet: URL:http://en.wikipedia.org/w/index.php?ti tle=Joint_Test_Action_Group&old id=333527008 [extrait le 2011-01-12]

## Description

L'objet de l'invention concerne un dispositif destiné à être positionné en amont d'un ensemble de composants connectés en série sur un bus de type JTAG et permettant de sécuriser l'accès au bus et de fait l'accès aux différents composants connectés sur le bus.

Le dispositif de sécurisation selon l'invention peut être utilisé de manière plus générale au niveau de tout type de bus.

Le mot « équipement » utilisé dans la présente description désigne un ensemble constitué du bus et des composants chaînés sur ce Bus.

Le bus JTAG abréviation anglo-saxonne de Joint Test Action Group dans son mode chaînage des composants plus connu en langage anglo-saxon par « scan chain » qui correspond à sa mise en oeuvre est aujourd'hui un élément performant et très utilisé durant les phases de développement, de production et de maintenance d'un équipement afin de faciliter la mise en oeuvre, le diagnostic, et la mise à jour des composants présents sur la chaîne JTAG, c'est-à-dire des composants en communication avec ledit bus. Il présente néanmoins l'inconvénient d'être très intrusif par rapport aux composants qui se trouvent sur des cartes chainées sur le Bus.

Dans un environnement sensible en termes de confidentialité et d'intégrité, de telles fonctionnalités peuvent devenir de réelles failles de sécurité dès lors qu'un accès physique à un composant ou une carte est possible. Les composants actuellement utilisés dans les équipements et qui ne peuvent être considérés comme de « confiance », n'offrent pas tous la possibilité de verrouiller leurs interfaces JTAG, ce qui présente une réelle menace sur les données traitantes et traitées au niveau des composants et du Bus.

En conséquence, une des solutions connues de l'art antérieur consiste à « enfouir » ce bus en fin de phase de production des équipements afin d'interdire ou au moins retarder son accès et la possibilité d'altérer les composants ou les données de ces composants chainés sur le Bus.

Il est aussi connu de mettre en oeuvre des dispositifs qui utilisent des méthodes d'authentification entre les composants présents sur le bus JTAG et le dispositif externe désirant s'y connecter.

Le brevet US 2007/0044158 décrit un système électronique d'activation d'une interface de debug par l'utilisation d'une clé cryptographique mettant en oeuvre un premier mécanisme d'inhibition/activation d'une interface externe de debug d'un système et un deuxième mécanisme de détection d'ouverture du boitier mécanique contenant le système.

Le document intitulé « Test control for Secure Scan design » concerne un symposium du groupe européen de l'IEEE autour des problématiques de test, présente de possibles modifications du contrôleur TAP JTAG intégré à un composant pour répondre à une utilisation illicite des fonctions de test sur ce composant. Les fonctions de test ciblé dans le document, bien qu'elles ne soient nommées, reposent sur les fonctions INTEST décrites par le standard 1149.1 pour le test structurel d'un composant.

Le brevet US 2007/0188351 décrit un système de contrôle de droit de licences permettant l'activation de fonctionnalités matérielles associées, présente un cas d'emploi pour reposant sur l'utilisation d'un bus JTAG.

L'idée de la présente invention repose sur l'utilisation d'un dispositif de sécurisation du Bus JTAG que l'on va positionner en tout début de chaîne JTAG et qui va permettre la surveillance et le contrôle du fonctionnement de ce bus.

L'objet de l'invention concerne un dispositif destiné à sécuriser un bus de type JTAG dans sa fonctionnalité scan chain, lorsque plusieurs composants Ci sont connectés en série sur ledit bus JTAG, ledit dispositif de sécurisation comportant au moins une interface ES₁ permettant de recevoir les signaux JTAG et au moins une interface ES₂ pour les signaux JTAG provenant de la chaîne de composants, caractérisé en ce qu'il comporte au moins les modules suivants :
- Un module F1 de générateur de trames JTAG adapté à vérifier la continuité de fonctionnement dudit bus et des composants,
- Un module F3 de surveillance d'activité électrique dudit bus et des composants,
- Un module alarme adapté à remonter une alarme détectée par les modules F1 et F3,
- Un module alarme de gestion du mode de fonctionnement du dispositif,
- Un module d'activation des fonctions de sécurisation AFS.

Le dispositif de sécurisation comporte, par exemple, un module F2 de filtrage des commandes passées sur le bus JTAG.

Il peut comporter un multiplexeur M qui reçoit un signal d'activation de la part du module AFS, et ledit multiplexeur M gère l'accès concurrent au bus JTAG entre les commandes provenant de l'Extérieur et celles émises par le module générateur de trames F1.

L'invention concerne aussi un procédé de sécurisation de fonctionnement d'un Bus JTAG caractérisé en ce qu'il met en oeuvre du dispositif de sécurisation DS présentant les caractéristiques précitées.

Dans un mode veille, pour chaque changement d'état de n'importe lequel des signaux tckExt, tmsExt, tdiExt et tdoExt, tckCh, tmsCh, tdiCh et tdoCh du bus JTAG, le procédé selon l'invention active un signal d'alarme.

Selon un autre mode de mise en oeuvre, pour le procédé et lorsque le dispositif de sécurisation selon l'invention reçoit les 4 signaux tckExt, tmsExt, tdiExt et tdoExt, tckCh provenant d'un port JTAG (ES₁, ES₂) de l'équipement comprenant le Bus et les composants le procédé filtre les commandes JTAG en fonction du jeu d'instructions autorisé par le mode de fonctionnement dans lequel se trouve un composant.

Dans l'un des modes suivants : mode usine déverrouillé, mode usine verrouillé, mode maintenance verrouillé ou maintenance déverrouillé, à chaque instruction n'appartenant pas au jeu d'instructions autorisé et présente sur le port JTAG symbolisé par les entrées ES₁, ES₂, en entrée du dispositif de sécurisation, ce dernier active une "alarme" commande_interdite".

Le procédé peut comporter une étape au cours duquel on teste l'intégrité du Bus JTAG et en ce que ladite étape comporte
- Une émission de trames par le modulateur de trames F1, après activation du module F1 par le module AFS d'activation des fonctions de sécurisation d'un signal de test de la chaîne composée des composants, lesdites trames comprenant les signaux correspondant aux signaux JTAG TCK_géné, TMS_géné, TDI_géné,
- Le module F1 reçoit en retour des informations en provenance de la chaîne des composants et va émettre des signaux d'une part vers le module AFS, à savoir le résultat du test de la chaîne, un signal erreur dans le cas où le générateur de trames F1 a décrété une erreur sur le fonctionnement d'un composant et il transmet les données tdo_Ext vers l'interface ES₁.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de synoptique de la sécurisation de la chaîne JTAG par le dispositif selon l'invention,
- La figure 2, un exemple de synoptique interne du dispositif selon l'invention dans le cadre de l'utilisation d'un FPGA,
- La figure 3 un diagramme d'état des modes fonctionnement du dispositif de sécurisation selon l'invention.

Afin de mieux faire comprendre l'invention, l'exemple qui suit est donné dans le cadre d'un bus JTAG, mais peut se généraliser à tout type de bus présentant des fonctionnalités semblables à celles du Bus JTAG.

Pour rappel, le bus JTAG est un bus série synchrone composé des 5 signaux de contrôle suivants :
- TMS (abréviation anglo-saxonne de Test Mode Select) pour le signal d'activation de la communication JTAG,
- TCK (abréviation anglo-saxonne de Test Clock) pour l'Horloge,
- TDI (abréviation anglo-saxonne de Test Data Input) pour l'Entrée des Données,
- TDO (abréviation anglo-saxonne de Test Data Output) pour la sortie des Données,
- TRST (abréviation anglo-saxonne de Test ReSet) pour la réinitialisation. Ce signal optionnel est actif au niveau bas.

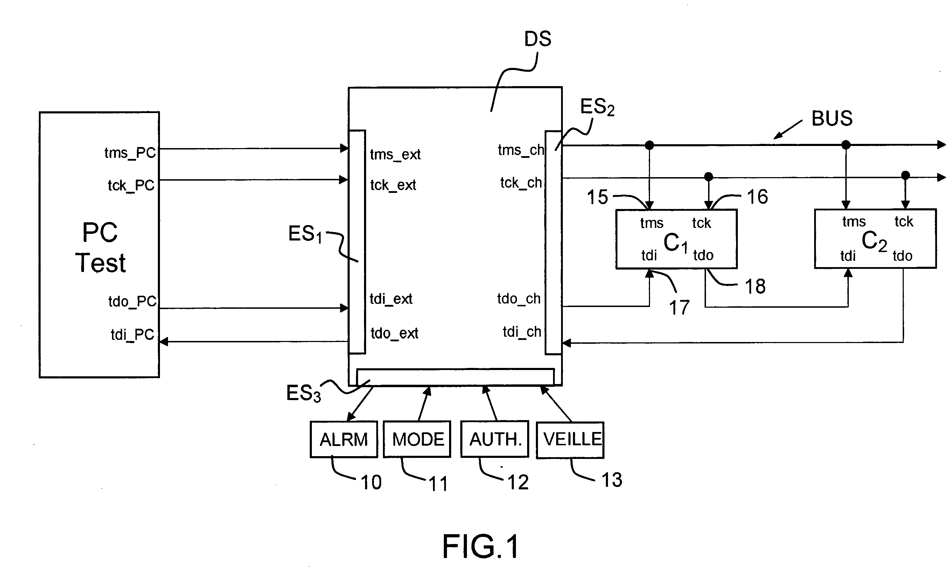

La figure 1 représente un synoptique de la sécurisation de la chaîne JTAG par le dispositif de sécurisation DS selon l'invention.

Le dispositif de sécurisation selon l'invention est placé à l'entrée d'un bus JTAG sur lequel peuvent être connectés N composants Ci.

La fonctionnalité du dispositif de sécurisation selon l'invention comporte, par exemple, un ou plusieurs des modules suivants :
- La surveillance de l'activité sur le bus JTAG,
- Le filtrage des commandes passées sur la chaîne JTAG en fonction d'un niveau d'authentification et de la phase de vie de l'équipement,
- Le test d'intégrité de la chaîne JTAG,
- La gestion d'alarmes liées à l'activité du bus JTAG.

Sur la figure 1, trois interfaces physiques entrée/sortie ES₁, ES₂, ES₃ sont représentées pour permettre au dispositif de sécurisation selon l'invention de communiquer avec l'extérieur.

Dans le cas d'une réalisation en technologie programmable de type FPGA (Field Programmable Gate Array), le dispositif de sécurisation selon l'invention DS comportera aussi une interface pour sa programmation propre, le signal d'horloge et le signal de remise à zéro ou reset du FPGA, ainsi que le signal d'alimentation dans le cas où le dispositif de sécurisation selon l'invention ne comporte pas son alimentation propre.

Les signaux JTAG venant de l'extérieur sont référencés avec le suffixe Ext. On retrouve donc sur l'interface entrée/sortie ES₁, les signaux suivants : TCK_Ext, TMS_Ext, TDI_Ext, TDO_Ext correspondant respectivement aux signaux Horloge, signal d'activation de la communication JTAG, l'Entrée des Données et la sortie des Données. Ces signaux peuvent provenir d'un dispositif autre qu'un PC test.

Les signaux en provenance de la chaîne sur laquelle sont reliés les différents composants Ci sont référencés avec le suffixe CH et se retrouvent sur l'interface entrée/sortie ES₂. Ces signaux sont : TCK_CH, TMS_CH, TDI_CH et TDO_CH qui correspondent respectivement aux signaux Horloge, au signal d'activation de la communication JTAG, à l'Entrée des Données et à la sortie des Données relatives aux composants Ci.

La description utilisera les majuscules ou les minuscules pour désigner indifféremment les signaux précités.

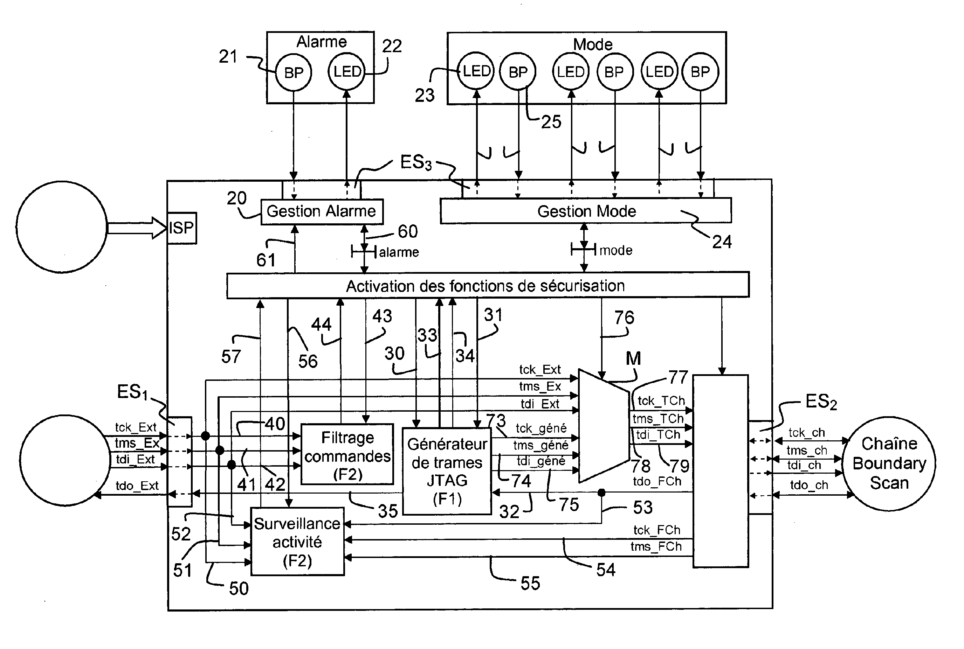

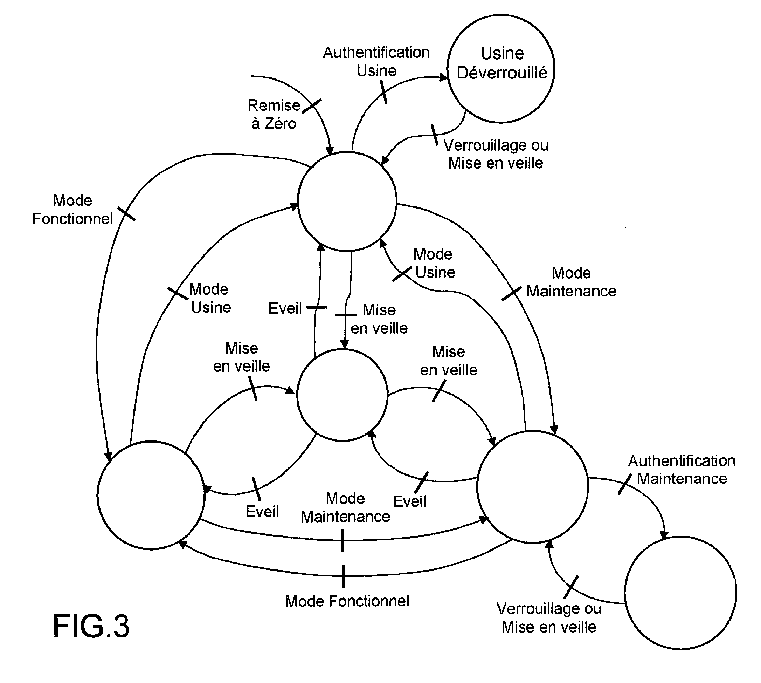

L'entrée/sortie ES₃ va permettre une interface avec, par exemple, un module de gestion d'alarme 10, un module de gestion 11 du mode d'utilisation du dispositif de sécurisation, des exemples de mode étant donnés aux figures 2 et 3, un module d'authentification 12, un module de veille 13.

Chacun des composants Ci reliés au bus JTAG comprend une entrée 15 pour les signaux tms, une entrée 16 pour les signaux tmi, une entrée 17 pour les signaux tck et une sortie 18 pour les signaux de données tdo en direction d'un autre composant CN+1.

La figure 2 représente les composants et modules du dispositif de sécurisation, ainsi que leurs interactions avec la chaîne de composants et les modules de gestion d'alarme..

Sur cette figure 2, on retrouve sur la première interface ES₁, les signaux du bus JTAG en provenance de l'extérieur : TCK_ext, TMS_Ext, TDI_Ext, TDO_Ext. Les signaux peuvent provenir d'un PC test ou encore de tout autre moyen.

Une deuxième interface ES₂ permet le dialogue avec les différents composants de la chaîne « boundary scan ».

Une troisième interface ES₃ permet de connecter, par exemple, un premier module 20 de gestion des alarmes, en liaison un bouton poussoir 21 qui permet notamment une remise à zéro ou encore la désactivation d'une alarme, une LED 22 déclenchée par une alarme indiquant un dysfonctionnement dans le fonctionnement de la chaîne bus JTAG, composants.

L'interface ES₃ permet aussi d'interfacer avec le dispositif de sécurisation un module de gestion de mode 24. Le module de gestion de mode va gérer les modes de fonctionnement du dispositif de sécurisation selon l'invention, comme il sera explicité ci-après. L'accès, l'activation d'un mode ou d'un autre sera effectuée en utilisant, par exemple, un bouton poussoir 25, une LED 26 sera le témoin de cette activité.

Le dispositif de sécurisation DS selon l'invention comprend, par exemple :
- Un module F1 de générateur de trames JTAG qui sont utilisées pour vérifier la continuité du bus JTAG, c'est-à-dire la bonne liaison des différents composants sur le Bus et l'authenticité des composants qui y sont connectés. Pour cela, le module F1 émet régulièrement ou à la demande, des trames de commande vers la chaîne de composants pour s'assurer de la complétude et de l'intégrité des réponses du et/ou des composant(s) adressés sur le bus. Les commandes JTAG utilisées à cette fin, telles que celles définies dans le standard JTAG comme IDCODE ou USERCODE permettent de récupérer le contenu de registres disponibles au niveau du contrôleur JTAG de chaque composant connecté au bus, ces registres pouvant contenir l'identifiant du constructeur du composant, celui de l'industriel réalisant l'équipement, voire une signature cryptographique permettant d'assurer l'authenticité du composant .
- Un module F2 de filtrages des commandes, qui passent sur le bus,
- Un module F3 de surveillance de l'activité électrique sur le bus selon un mode de fonctionnement donné,
- le module alarme 20 et le module de gestion de mode 24.

Les différents modules mis en oeuvre dans le dispositif de sécurisation selon l'invention sont i décrites ci-après.

Le module F1 de générateur de trames reçoit des signaux de la part d'un module AFS d'activation des fonctions de sécurisation, par exemple, un signal de démarrage ou d'arrêt 30 du test de la chaîne, un signal 31 de remise à zéro de la part du module d'activation des fonctions de sécurisation AFS. Il reçoit aussi des informations 32 en provenance de la chaîne des composants plus connue sous la dénomination anglo-saxonne « Chain Boundary Scan » via un module de gestion des entrées/sorties GIO. Il va émettre des signaux d'une part vers le module AFS, à savoir le résultat du test de la chaîne 33, un signal erreur 34 dans le cas où le générateur de trames a décrété une erreur sur le fonctionnement d'un composant et il transmet les données tdo_Ext vers l'interface ES1. Le générateur de trames va générer des signaux 36, 37, 38 correspondant aux signaux JTAG TCK_ géné, TMS_ géné, TDI_géné, et qui vont permettre de tester le fonctionnement d'un composant, ou sa bonne connexion au bus JTAG.

Le module F2 est un module de filtrage de commandes. Il reçoit les différents signaux JTAG 40, 41, 42 respectivement TCK_ext, TMS_Ext, TDI_Ext de la part d'un PC test par exemple, un signal 43 issu de l'AFS et correspondant à un signal de démarrage de la fonction filtrage des commandes de la part du module AFS. Il émet un signal 44 vers le module AFS qui remonte un signal de déclenchement d'alarme dans le cas où la commande vers un composant de la chaîne ne doit pas être autorisée. Pour cela, le module peut comporter une table comprenant les commandes autorisées ainsi qu'un module de comparaison entre les signaux de commande reçus et les commandes autorisées mémorisées.

Le module F3 va recevoir les signaux JTAG provenant de l'extérieur 50, 51, 52 respectivement TCK_ext, TMS_Ext, TDI_Ext et aussi les signaux JTAG 53, 54, 55 respectivement tdo_ch, tck_ch, tms_ch issus de la chaîne des composants. F3 reçoit aussi le signal 56 du module AFS permettant le démarrage ou l'arrêt de la fonction surveillance d'activité électrique et renvoie vers ce même module un signal de détection 57 d'activité qui sera interprété en fonction du contexte, du mode de fonctionnement du bus.

Le dispositif DS comprend aussi un multiplexeur M qui reçoit un signal d'activation de la part du module AFS. Le multiplexeur M permet de gérer l'accès concurrent au bus JTAG entre les commandes provenant de l'Extérieur et celles émises par le générateur de trames F1. Ce multiplexeur M est, par exemple, sollicité lors du mode surveillance de la continuité du Bus.

Le module alarme 20 reçoit de l'AFS des signaux d'alarme en cas d'anomalie détectée (activité inattendue, commande interdite, etc.) et renvoie des signaux d'acquittement d'alarme pour indiquer la prise en compte de l'alarme, par exemple.

Le module mode ou gestion de mode 24 permet d'indiquer au module de sécurisation du bus JTAG l'état courant dans le cycle de vie de l'équipement. Par exemple, le mode normal MN, le mode veille MV, le mode authentification usine MAU, le mode usine verrouillé MUV, le mode maintenance verrouillé MMV ou le mode maintenance déverrouillé MMA ou le mode maintenance authentification. Ces modes seront détaillés plus loin dans la description.

Le dispositif de sécurisation DS selon l'invention du bus JTAG active ses tâches de surveillance en fonction du mode de fonctionnement dans lequel il évolue.

En fonction de ce mode, par exemple, le dispositif de sécurisation selon l'invention doit:
- soit laisser passer le jeu d'instructions JTAG correspondant à un mode sélectionné et filtrer le reste des instructions JTAG,
- soit surveiller l'activité sur le Bus.

Il est aussi adapté à tester l'intégrité de la chaîne (continuité de la chaîne et identification des composants Ci).

En parallèle, le dispositif selon l'invention va gérer les signaux de changement de mode de fonctionnement du dispositif et de l'alarme.

Un mode de fonctionnement se définit par la combinaison du cycle de vie dans lequel se trouve le composant et un état d'authentification préalable de l'opérateur désirant utiliser le Bus JTAG.

Le dispositif de sécurisation selon l'invention va, par exemple, gérer 7 modes de fonctionnement suivants:
- Remise à zéro ou reset,
- Usine verrouillé,
- Usine déverrouillé,
- Normal,
- Veille,
- Maintenance verrouillé,
- Maintenance déverrouillé.
**Mode de remise à zéro ou mode reset :** la logique interne (machines d'état, bascules) du dispositif de sécurisation DS selon l'invention est figée dans un état connu. Les entrées/sortie ES₁ et ES₂ gérées par le dispositif DS sont dans un état connu. Le dispositif selon l'invention est dans le mode Reset lorsque le signal Reset_dispositif est à l'état logique.
**Mode Usine** Verrouillé MUV: le dispositif DS selon l'invention filtre le jeu d'instructions en mode usine (seules les instructions IDCODE, USERCODE; USER1, USER2 connues de la norme JTAG sont autorisées). Il surveille également le Bus quand il est inactif pour détecter une intrusion interne à la chaîne. Il lève une alarme s'il détecte une instruction interdite sur le Bus.

Les instructions listées correspondent au minimum à celles décrites dans le standard IEEE 1149.1-2001 (R2008). Elles peuvent également comprendre des instructions spécifiques mises en oeuvre par les fabricants des composants intégrant un contrôleur JTAG, ces instructions devant tout de même respecter un format défini par le standard.
**Mode normal MN:** le dispositif DS selon l'invention filtre le jeu d'instruction en mode normal. Il surveille également le Bus quand il est inactif pour détecter une intrusion interne à la chaîne. Il lève une alarme s'il détecte une instruction interdite sur le Bus.
Ces commandes sont données à titre indicatif : la liste des commandes à utiliser est dépendante du contexte de mise en oeuvre du dispositif. Sans sortir du cadre de l'invention, il est possible d'utiliser d'autres instructions.
**Mode veille MV:** le dispositif selon l'invention est alimenté sur batterie et les autres composants de la chaîne JTAG ne sont pas alimentés. Le dispositif selon l'invention surveille l'activité sur le Bus et lève une alarme s'il détecte un changement d'état sur un des signaux du Bus.
**Mode Maintenance Verrouillé MMV :** le dispositif de sécurisation selon l'invention filtre intégralement les commandes passées sur le Bus JTAG (aucune commande n'est autorisée). Il lève une alarme s'il détecte une instruction sur le Bus.
**Mode Maintenance Déverrouillé MMD:** le dispositif selon l'invention filtre en mode fonctionnel (par exemple, seules les instructions IDCODE, USERCODE et USER1 sont autorisées). Il surveille également le bus quand il est inactif pour détecter une intrusion interne à la chaîne. Il lève une alarme s'il détecte une intrusion interdire sur le bus.

La figure 3 schématise un diagramme d'état et de transition des différents modes de fonction du dispositif de sécurisation selon l'invention.

Les fonctionnalités sont regroupées dans le tableau suivant

| **Phase de fonctionnement** | **état** | **F1** | **F2** | **F3** |
|---|---|---|---|---|
| Usine | verrouillé | Oui | non | Oui |
| Usine | Déverrouillé | Oui | Oui | Oui |
| Normal | Verrouillé | Oui | Oui | Oui |
| Veille | Verrouillé | Non | Non | Oui |
| Maintenance | Verrouillé | Oui | Non | Oui |
| maintenance | Déverrouillé | Oui | Oui | oui |
| | | | | |

Le test d'intégrité est effectué au moins une fois au démarrage de l'équipement. Il fait partie intégrante de l'auto-test.

Quand le système est dans un mode déverrouillé, c'est-à-dire qu'il y a eu authentification de l'utilisateur, alors le dispositif de sécurisation selon l'invention fait une surveillance quand il n'y a pas de commande passée (vérification que toute commande passée provient du bus JTAG.

### Surveillance du Bus JTAG

Le dispositif de sécurisation selon l'invention reçoit les signaux (tckExt, tmsExt, tdiExt et tdoExt) provenant du port JTAG de l'équipement constitué du Bus et des composants ainsi que les signaux JTAG (tckCh, tmsCh, tdiCh et tdoCh) provenant du Bus JTAG chaînant certains composants Ci de l'équipement.

En mode veille, les composants chaînés sur le Bus JTAG ne sont pas alimentés. Ils agissent comme des circuits ouverts sur le Bus. Dans ce mode, la surveillance du bus JTAG permet de détecter toute tentative d'intrusion soit sur le port JTAG de l'équipement, soit sur l'un des composants présents sur la chaîne et qui serait alimenté correctement. Dans les autres modes, la fonction surveillance est active en l'absence de commande autorisée présente sur les ports ES₁ et ES₂ du dispositif de sécurisation. Dans ces modes, la fonction de surveillance permet de détecter toute intrusion directe sur le bus JTAG. Dans ce mode veille, une commande présente sur l'interface ES₁ caractérise une intrusion à partir de l'extérieur de la chaîne JTAG. Une commande présente sur l'interface ES₂ caractérise quant à elle une intrusion à l'intérieur de la chaîne JTAG. Sur ce dernier point, la surveillance sur le port ES₂ s'effectue en dehors des instants de test d'intégrité et de continuité.

### Mode veille

Surveillance du Bus JTAG dans le mode VEILLE.

A chaque changement d'état de n'importe lequel des signaux tckExt, tmsExt, tdiExt et tdoExt, tckCh, tmsCh, tdiCh et tdoCh le dispositif de sécurisation selon l'invention doit lever une alarme (par exemple, activation "détection_activité_non_autorisée) et allumer la LED ou tout autre dispositif équivalent "alarme".

### Autres modes que mode veille

### Filtrage des commandes sur le Bus JTAG

Le dispositif de sécurisation selon l'invention reçoit les 4 signaux tckExt, tmsExt, tdiExt et tdoExt, tckCh provenant du port JTAG (ES₁, ES₂) de l'équipement. Il est ainsi capable d'analyser ces signaux et d'en déduire les commandes passées sur le Bus. L'objectif est notamment de filtrer les commandes JTAG en fonction du jeu d'instructions autorisé par le mode de fonctionnement dans lequel se trouve le composant.

### Modes usine verrouillé et maintenance verrouillé

Filtrage des commandes sur le bus JTAG dans les modes Usine verrouillé et Maintenance verrouillé.

Dans ces modes, le filtrage des commandes est total. Aucune commande ne doit être passée sur le bus. A chaque instruction détectée sur le port JTAG en entrée du dispositif de sécurisation selon l'invention, ce dernier doit, par exemple, lever une alarme "commande_interdite" et allumer la LED "alarme".

### Mode usine déverrouillé

Filtrage des commandes sur le Bus JTAG dans le mode usine déverrouillé.

Dans ce mode, le jeu d'instructions autorisé comprend, par exemple, les instructions suivantes: IDCODE, USERCODE, EXTEST, USER1, USER2, USER3. A chaque instruction n'appartenant pas au jeu d'instructions autorisé et présente sur le port JTAG en entrée du dispositif de sécurisation selon l'invention, ce dernier doit lever une "alarme" commande_interdite" et allumer la LED alarme.

### Mode maintenance déverrouillé

Filtrage des commandes sur le Bus JTAG dans le mode Maintenance déverrouillé

Dans ce mode, il est possible d'utiliser le jeu d'instruction autorisé suivant: IDCODE, USERCODE, EXTEST. A chaque instruction n'appartenant pas au jeu d'instructions autorisé et présente sur le port JTAG en entrée du dispositif de sécurisation selon l'invention, ce dernier doit lever une "alarme" commande_interdite" et, par exemple, allumer la LED alarme.

### Mode fonctionnel

Filtrage des commandes sur le Bus JTAG dans le mode Fonctionnel

Dans ce mode, le jeu d'instruction autorisé comprend, par exemple, les instructions suivantes: IDCODE et USERCODE. A chaque instruction n'appartenant pas au jeu d'instructions autorisé et présente sur le port JTAG en entrée du dispositif de sécurisation selon l'invention, ce dernier doit, par exemple, lever une "alarme" commande_interdite" et allumer la LED alarme.

### Mode veille

Filtrage des commandes sur le Bus JTAG en mode veille.

La fonction de filtrage des commandes ne doit lever aucune alarme dans le mode veille.

### Test d'intégrité du Bus JTAG

Le dispositif de sécurisation selon l'invention teste l'intégrité du Bus JTAG au moins à chaque démarrage de l'équipement. Par la mise en oeuvre du module F3, il assure un test de continuité de la chaîne (vérifier que la chaîne n'est pas coupée) et vérifie l'authenticité des composants présents sur la chaîne afin de vérifier leur authentification. L'authentification se base, par exemple, sur une simple vérification des identifiants rendus en réponse aux instructions IDCODE et USERCODE d'origine des composants.

### Tous les modes sauf le mode veille

### Test de continuité du Bus JTAG dans tous les modes sauf le mode veille

Le dispositif de sécurisation selon l'invention programme tous les composants du Bus JTAG en bypass et envoie par exemple une trame IDCODE sur le signal tdoCh. Il doit recevoir cette même trame sur le signal tdiCh après un nombre de périodes d'horloge correspondant au nombre de composants présents sur la chaîne. S'il ne reçoit pas la bonne trame, le dispositif de sécurisation selon l'invention va lever une alarme "erreur_chaîne" et, par exemple, allumer la led "alarme".

### Test d'identifications des composants du Bus JTAG dans tous les modes sauf le mode veille

Le dispositif de sécurisation selon l'invention programme tous les composants du Bus JTAG avec les instructions de requête d'idcode et de usercode et récupère les données sur le signal tdoCh correspondant aux IDCODEs et USERCODEs des composants du Bus. Il vérifie alors la cohérence entre les IDCODEs et USEROCE de base et les IDCODEs et USERCODEs récupérés. S'il y a une différence, le dispositif de sécurisation selon l'invention lève une alarme "erreur_chaîne" et allume la led "alarme".

### Mode veille

### Test d'intégrité du Bus JTAG dans le mode Veille

Aucune alarme n'est levée.

La fonction REQ-MOI connue de la norme JTAG est désactivée dans le mode veille.

### GESTION MODE

Le dispositif de sécurisation selon l'invention reçoit les signaux indiquant le mode dans lequel le système de base se situe (modes décrits dans le diagramme de la figure 3). Il interprète ces signaux pour mettre à jour le mode de fonctionnement. Cette donnée est utile au dispositif de sécurisation selon l'invention pour savoir quelle fonction il doit activer.

### Gestion des modes de fonctionnement du système

Le dispositif de sécurisation selon l'invention met à jour la variable partagée Modeimage du mode de fonctionnement du système à partir des signaux usine/auth, Maintenance/Auth et Normal/Veille.

### GESTION ALARME

Le dispositif de sécurisation DS selon l'invention possède trois fonctions de détection de comportement anormal sur le Bus JTAG. A chaque détection d'un comportement de ce type (activation des signaux détection_activité", "commande-interdite" ou "erreur_chaîne"), il doit activer une alarme. L'utilisateur, après prise en compte de cette alarme, peut la réinitialiser par le signal reset_alarme.

### Gestion de l'alarme

Le dispositif de sécurisation selon l'invention met à jour la variable partagée Alarme qui commande la led du même nom en fonction des commandes set_alarme et reset_alarme.

### ACTIVATION DES FONCTIONS DE SECURISATION

A partir de la variable partagée Mode, le dispositif de sécurisation selon l'invention doit activer une ou plusieurs de ses trois fonctions de sécurisation et générer le signal de commande du multiplexeur servant à laisser passer le flux JTAG ou à prendre la main sur le bus. Il doit aussi récupérer les anomalies détectées par ces fonctions et activer l'alarme "signal set_alarme".

Le dispositif de sécurisation selon l'invention doit activer les fonctions de sécurisation en fonction du mode de fonctionnement du système.

Il doit aussi être adapté à activer l'alarme lorsque l'une de ses fonctions de sécurisation lui signale un comportement anormal sur le Bus.

Selon une variante de réalisation, le dispositif DS de sécurisation selon l'invention comprend une interface ISP reliée à un PC programmable permettant la programmation des modules du dispositif de sécurisation selon l'invention.

Le dispositif de sécurisation selon l'invention permet l'utilisation de ce bus même durant les phases opérationnelles de l'équipement. Il fournit un autotest au démarrage de l'équipement. Il permet un diagnostic régulier ou à la demande de certains composants. Il autorise des fonctions de maintenance test étendu, re-programmation éventuelle du composant. Il offre une complémentarité aux fonctionnalités de verrouillage de l'interface présentes sur certains composants.

## Revendications

1. Dispositif destiné à sécuriser un bus de type JTAG dans sa fonctionnalité mode de chaînage des composants ou "scan chain", lorsque plusieurs composants Ci sont connectés en série sur ledit bus JTAG, ledit dispositif de sécurisation comportant au moins une interface ES₁ permettant de recevoir les signaux JTAG et au moins une interface ES₂ pour les signaux JTAG provenant de la chaîne de composants, **caractérisé en ce qu'**il comporte au moins les modules suivants :
• Un module F1 de générateur de trames JTAG adapté à vérifier la continuité de fonctionnement dudit bus et des composants,
• Un module F3 de surveillance d'activité électrique dudit bus et des composants,
• Un module alarme (20) adapté à remonter une alarme détectée par les modules F1 et F3,
• Un module alarme (24) de gestion du mode de fonctionnement du dispositif,
• Un module d'activation des fonctions de sécurisation AFS.

2. Dispositif de sécurisation d'un bus JTAG selon la revendication 1 **caractérisé en ce qu'**il comporte un module F2 de filtrage des commandes passées sur le bus JTAG.

3. Dispositif de sécurisation d'un bus JTAG selon l'une des revendications 1 ou 2 **caractérisé en ce qu'**il comporte un multiplexeur M qui reçoit un signal d'activation de la part du module AFS, et ledit multiplexeur M gère l'accès concurrent au bus JTAG entre les commandes provenant de l'Extérieur et celles émises par le module générateur de trames F1.

4. Procédé de sécurisation de fonctionnement d'un Bus de type JTAG **caractérisé en ce qu'**il met en oeuvre du dispositif de sécurisation DS selon la revendication 1.

5. Procédé de sécurisation selon la revendication 4 **caractérisé en ce que** dans un mode veille, pour chaque changement d'état de n'importe lequel des signaux TCK_ext, TMS_Ext, TDI_Ext, TDO_Ext correspondant aux signaux horloges, au signal d'activation de la communication, à l'entrée des donnés et à la sortie des donnés, et des signaux tck_Ch, Tms_Ch, Tdi_Ch et Tdo_Ch provenant du bus JTAG, chaînant certains composants Ci de l'équipement, le procédé active un signal d'alarme.

6. Procédé selon la revendication 4 **caractérisé en ce que** le dispositif de sécurisation selon l'une des revendications 1 à 3 reçoit les 4 signaux TCK_ext, TMS_Ext, TDI_Ext, TDO_Ext correspondant aux signaux horloges, signal d'activation de la communication, l'entrée des donnés et la sortie des donnés provenant d'un port JTAG (ES₁, ES₂) de l'équipement comprenant le Bus et les composants et filtre les commandes JTAG en fonction du jeu d'instructions autorisé par le mode de fonctionnement dans lequel se trouve un composant.

7. Procédé selon la revendication 4 **caractérisé en ce que** dans l'un des modes suivants : mode usine déverrouillé, mode usine verrouillé, mode maintenance verrouillé ou maintenance déverrouillé, à chaque instruction n'appartenant pas au jeu d'instructions autorisé et présente sur le port JTAG (ES₁, ES₂) en entrée du dispositif de sécurisation, ce dernier active une "alarme" commande_interdite".

8. Procédé selon la revendication 4, **caractérisé en ce qu'**il comporte une étape au cours duquel on teste l'intégrité du Bus JTAG et **en ce que** ladite étape comporte :
• Une émission de trames par le modulateur de trames F1, après activation du module F1 par le module AFS d'activation des fonctions de sécurisation d'un signal de test de la chaîne composée des composants, lesdites trames comprenant des signaux (36, 37, 38) générés par un générateur de trames correspondant aux signaux JTAG TCK_ géné, TMS_ géné, TDI_géné, lesdits signaux permettant de tester le fonctionnement d'un composant ou de la bonne connexion au bus JTAG.
• Le module F1 reçoit en retour des informations (32) en provenance de la chaîne des composants et va émettre des signaux d'une part vers le module AFS, à savoir le résultat du test de la chaîne (33), un signal erreur (34) dans le cas où le générateur de trames F1 a décrété une erreur sur le fonctionnement d'un composant et il transmet les données tdo_Ext vers l'interface ES₁.

## Patentansprüche

1. Vorrichtung zum Absichern eines Busses des JTAG-Typs in seiner Komponentenverkettungsmodus- oder "Scan Chain"-Funktionalität, wenn mehrere Komponenten Ci in Serie auf dem JTAG-Bus geschaltet sind, wobei die Absicherungsvorrichtung wenigstens eine Schnittstelle ES₁ zum Empfangen der JTAG-Signale und wenigstens eine Schnittstelle ES₂ für die von der Komponentenkette kommenden JTAG-Signale umfasst, **dadurch gekennzeichnet, dass** sie wenigstens die folgenden Module umfasst:
• ein Modul F1 zum Erzeugen von JTAG-Frames zum Überprüfen der Betriebskontinuität des Busses und der Komponenten;
• ein Modul F3 zum Überwachen der elektrischen Aktivität des Busses und der Komponenten;
• ein Alarmmodul (20) zum Aktivieren eines Alarms, der von den Modulen F 1 und F3 erkannt wird;
• ein Alarmmodul (24) zum Verwalten des Betriebsmodus der Vorrichtung;
• ein Modul zum Aktivieren der Absicherheitsfunktionen AFS.

2. Vorrichtung zum Absichern eines JTAG-Busses nach Anspruch 1, **dadurch gekennzeichnet, dass** sie ein Modul F2 zum Filtern von auf dem JTAG-Bus geleiteten Befehlen umfasst.

3. Vorrichtung zum Absichern eines JTAG-Busses nach einem der Ansprüche 1 bis 2, **dadurch gekennzeichnet, dass** sie einen Multiplexer M umfasst, der ein Aktivierungssignal seitens des AFS-Moduls empfängt, und der Multiplexer M den konkurrenten Zugang zu dem JTAG-Bus zwischen von außen kommenden Befehlen und solchen verwaltet, die vom Frame-Generatormodul F1 gesendet werden.

4. Verfahren zum Absichern des Betriebs eines Busses des JTAG-Typs, **dadurch gekennzeichnet, dass** es die Absicherungsvorrichtung DS nach Anspruch 1 implementiert.

5. Absicherungsverfahren nach Anspruch 4, **dadurch gekennzeichnet, dass** in einem Standby-Modus für jede Zustandsänderung in einem beliebigen der Signale TCK_ext, TMS_Ext, TDI_Ext, TDO_Ext entsprechend den Taktsignalen, dem Signal zum Aktivieren der Kommunikation, am Dateneingang und am Datenausgang, und der Signale tck_Ch, Tms_Ch, Tdi_Ch und Tdo_Ch, die vom JTAG-Bus kommen, unter Verkettung bestimmter Komponenten Ci der Ausrüstung, das Verfahren ein Alarmsignal aktiviert.

6. Verfahren nach Anspruch 4, **dadurch gekennzeichnet, dass** die Absicherungsvorrichtung nach einem der Ansprüche 1 bis 3 die vier Signale TCK_ext, TMS_Ext, TDI_Ext, TDO_Ext empfängt, entsprechend den Taktsignalen, dem Signal zum Aktivieren der Kommunikation, dem Dateneingang und dem Datenausgang, der von einem JTAG-Port (ES₁, ES₂) der Ausrüstung kommt, die den Bus und die Komponenten umfasst, und die JTAG-Befehle in Abhängigkeit von dem Befehlssatz filtert, der von dem Betriebsmodus autorisiert wird, in dem sich eine Komponente befindet.

7. Verfahren nach Anspruch 4, **dadurch gekennzeichnet, dass** in einem der folgenden Modi: ungesperrter Werksmodus, gesperrter Werksmodus, gesperrter Wartungsmodus oder ungesperrter Wartungsmodus, bei jedem Befehl, der nicht zu dem autorisierten Befehlssatz gehört und der am JTAG-Port (ES₁, ES₂) am Eingang der Absicherungsvorrichtung anliegt, die Absicherungsvorrichtung einen "Befehl_untersagt" Alarm aktiviert.

8. Verfahren nach Anspruch 4, **dadurch gekennzeichnet, dass** es einen Schritt beinhaltet, bei dem die Integrität des JTAG-Busses getestet wird, und dadurch, dass der Schritt Folgendes beinhaltet:
• Senden von Frames durch den Frame-Modulator F1 nach der Aktivierung des Moduls F1 durch das Modul zum Aktivieren von Absicherungsfunktionen (AFS) eines Testsignals der aus den Komponenten bestehenden Kette, wobei die Frames Signale (36, 37, 38) umfassen, die von einem Frame-Generator erzeugt werden, der den JTAG-Signalen TCK_gene, TMS_géné, TDI_géné entspricht, wobei die Signale das Testen des Betriebs einer Komponente oder des korrekten Anschlusses am JTAG-Bus zulassen;
• im Gegenzug empfängt das Modul F1 Informationen (32), die von der Kette der Komponenten stammen, und sendet Signale einerseits zum AFS-Modul, nämlich das Ergebnis des Tests in der Kette (33), ein Fehlersignal (34), falls der Frame-Generator F1 einen Fehler im Betrieb einer Komponente festgestellt hat, und sendet die tdo_Ext Daten zur Schnittstelle ES₁.

## Claims

1. A device for securing a bus of the JTAG type in its component chaining mode or "scan chain" functionality when a plurality of components Ci is connected in series on said JTAG bus, said securing device comprising at least one interface ES₁ for receiving the JTAG signals and at least one interface ES₂ for the JTAG signals originating from the chain of components, **characterized in that** it comprises at least the following modules:
• a module F1 for generating JTAG frames designed to verify the operating continuity of said bus and the components;
• a module F3 for monitoring the electrical activity of said bus and the components;
• an alarm module (20) designed to raise an alarm detected by the modules F1 and F3;
• an alarm module (24) for managing the operating mode of said device;
• a module for activating security functions (AFS).

2. The device for securing a JTAG bus according to claim 1, **characterized in that** it comprises a module F2 for filtering commands passed on the JTAG bus.

3. The device for securing a JTAG bus according to any one of claims 1 to 2, **characterized in that** it comprises a multiplexer M that receives an activation signal from the AFS module, and said multiplexer M manages the concurrent access to the JTAG bus between commands originating from outside and those transmitted by the frame generator module F1.

4. A method for securing the operation of a bus of the JTAG type, **characterized in that** it implements the securing device DS according to claim 1.

5. The securing method according to claim 4, **characterized in that** in a stand-by mode, for each change of state of any of the signals TCK_ext, TMS_Ext, TDI_Ext, TDO_Ext corresponding to the clock signals, to the signal for activating the communication, at the data input and at the data output, and the signals tck_Ch, Tms_Ch, Tdi_Ch and Tdo_Ch originating from the JTAG bus, chaining certain components Ci of the equipment, the method activates an alarm signal.

6. The method according to claim 4, **characterized in that** the securing device according to any one of claims 1 to 3 receives the 4 signals TCK_ext, TMS_Ext, TDI_Ext, TDO_Ext corresponding to the clock signals, to the signal for activating the communication, at the data input and the data output originating from a JTAG port (ES1, ES2) of the equipment comprising the bus and the components, and filters the JTAG commands as a function of the set of instructions authorised by the operating mode in which a component is found.

7. The method according to claim 4, **characterized in that** in one of the following modes: unlocked factory mode, locked factory mode, locked maintenance mode or unlocked maintenance mode, upon each instruction not belonging to the authorised set of instructions and present on the JTAG port (ES₁, ES₂) at the input of the securing device, said securing device activates a "command_prohibited alarm".

8. The method according to claim 4, **characterized in that** it comprises a step during which the integrity of the JTAG bus is tested, and **in that** said step comprises:
• transmitting frames by the frame modulator F1, after activation of the module F1 by the module for activating security functions (AFS) of a test signal of the chain composed of the components, said frames comprising signals (36, 37, 38) generated by a frame generator corresponding to JTAG signals TCK_géné, TMS_géné, TDI_géné, said signals allowing the operation of a component or the correct connection to the JTAG bus to be tested;
• the module F1 in return receiving information (32) originating from the chain of the components and transmitting signals on the one hand to the AFS module, namely the result of the test on the chain (33), an error signal (34) in the event that the frame generator F1 has determined an error in the operation of a component, and transmitting the tdo_Ext data to the interface ES₁.
